# EUROPEAN PATENT APPLICATION

(11) **EP 2 554 380 A1**
(43) Date of publication of application: **06.02.2013**
(21) Application number: 11762730.7
(22) Date of filing: 25.03.2011
(51) Int. Cl.: B32B 37/00

(54) **METHOD FOR PRODUCING TRANSFER BODY**

(30) Priority: 30.03.2010 JP 2010079859
(71) Applicant: Nippon Sheet Glass Company, Limited, Tokyo 108-6321 (JP); Toppan TDK Label Co Ltd., Taito-ku Tokyo 110-0016 (JP)
(72) Inventor: YANO, Yota, Tokyo 108-6321 (JP); OGAWA, Hisashi, Tokyo 108-6321 (JP); KIMOTO, Yukio, Tokyo 108-6321 (JP); OKINAKA, Hiroyuki, Tokyo 108-6321 (JP); SUEHIRO, Toshikatsu, Tokyo 108-6321 (JP); NAKAMURA, Mitsuo, Tokyo 108-6321 (JP); MATSUDA, Masaru, Tokyo 110-0016 (JP); HASE, Kimio, Amagasaki-shi Hyogo 661-0981 (JP)
(74) Representative: Intès, Didier Gérard André
(86) International application number: PCT/JP2011/057464
(87) International publication number: WO 2011/122499

(57) **Abstract**

An object of the present invention is to provide a method for producing a transfer body, which method neither causes adhesion failure at the interface between a transferring film and a substrate, nor causes interlayer peeling in the transferring film. Another object of the present invention is to provide a method for producing a transfer body with high productivity, which method neither causes breakage of a functional pattern forming a transferring layer during peeling of a release film from the transferring film, nor causes any damage to the substrate during separation of an attaching roller and a peeling roller from the substrate.

## Description

### Technical Field

The present invention relates to a method for producing a transfer body. More specifically, the present invention relates to a method for producing a transfer body obtained by attaching a transferring film having a release film and a transferring layer onto a substrate having a smooth surface and no air permeability (e.g., a glass substrate), and peeling the release film from the thus-attached transferring film.

### Background Art

In some cases, a transferring film is used for forming, on a substrate (e.g., a glass substrate), an electrically conductive pattern (e.g., a wiring circuit pattern or an electrode pattern) or a decoration pattern (e.g., a design pattern). A method employing such a transferring film is advantageous in that the aforementioned electrically conductive pattern or decoration pattern or the like can be caused to follow a substrate employed, regardless of the size or shape of the substrate, and in that such a pattern can be formed on any substrate with high accuracy, high productivity and low cost. There have been proposed various transferring films which are applicable to such a transfer method (see, for example, Patent Document 1).

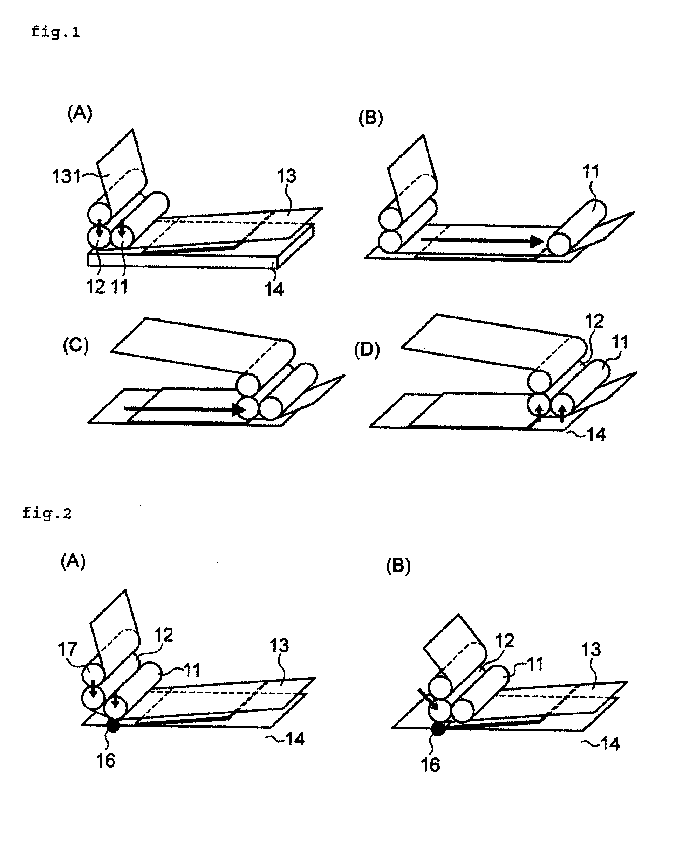

Hitherto, a method as shown in Fig. 1 has been used for effectively attaching a transferring film onto a substrate. Specifically, such a method includes a step of pressing a transferring film 13 onto a substrate 14 by means of an attaching roller 11 and a peeling roller 12 by lowering a head equipped with the attaching roller and the peeling roller (Fig. 1(A)) ; a step of attaching the transferring film onto the substrate by moving the attaching roller 11 toward a feed roller (not illustrated) for feeding the transferring film (Fig. 1(B)) ; a step of peeling a release film from the substrate by moving the peeling roller toward the feed roller (Fig. 1(C)) ; and a step of separating the attaching roller 11 and the peeling roller 12 from the substrate 14 and returning these rollers to their original positions by lifting the head (Fig. 1(D)).
An important point for transfer is that a material to be transferred is reliably transferred onto a substrate without causing the material to remain on a transferring film. In connection with this point, various transfer apparatuses have been proposed (see, for example, Patent Document 2).

### Prior Art Document

### Patent Document

Patent Document 1: Japanese Patent Application Laid-Open (*kokai*) No. 2008-307729
Patent Document 2: Japanese Patent Application Laid-Open (*kokai*) No. 2007-165379

### Brief Description of the Drawings

[Fig. 1]
   Fig. 1 shows a conventional method for transferring a transferring film onto a substrate.
[Fig. 2]
   Fig. 2 shows the method for producing a transfer body of the present invention.
[Fig. 3]

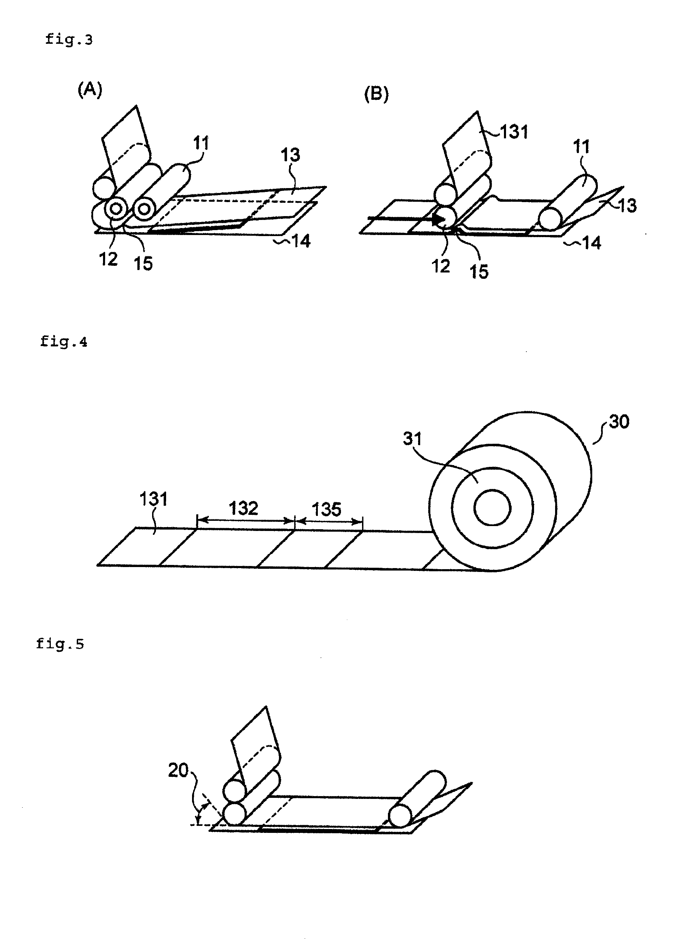

   Fig. 3 shows a mechanism of entering of air.
[Fig. 4]
   Fig. 4 shows a feed roll.
[Fig. 5]
   Fig. 5 shows a peeling angle in the case where a tension is applied to a transferring film.
[Fig. 6]

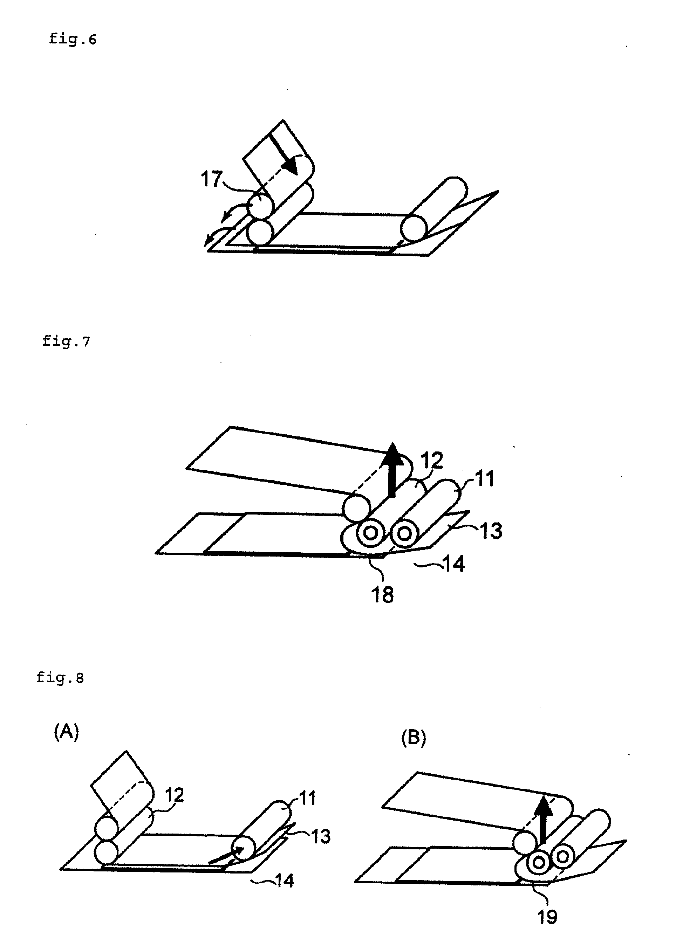

   Fig. 6 shows a peeling angle in the case where no tension is applied to a transferring film.
[Fig. 7]
   Fig. 7 shows the state where a transferring film is in contact with a substrate when a head is lifted in the conventional method.
[Fig. 8]
   Fig. 8 shows the method for producing a transfer body of the present invention.
[Fig. 9]

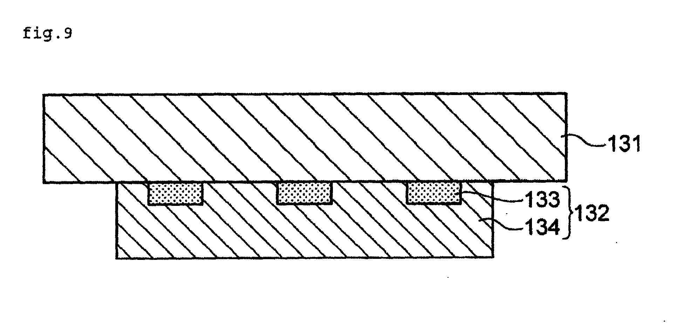

   Fig. 9 shows an example of a transferring film. Explanation of Codes

11: Attaching roller
12: Peeling roller
13: Transferring film
131: Release film
132: Transferring layer
133: Functional pattern
134: Pressure-sensitive adhesive layer
135: Space portion
14: Substrate
15: Entering of air
16: Attachment start point
17: Guide roller
18: State of surface contact
19: State of line contact
20: Peeling angle
30: Feed roll
31: Core

### Disclosure of the Invention

### Problems to be Solved by the Invention

When a transferring film is attached onto a substrate through the aforementioned conventional attachment method, air may sometimes enter between the transferring film and the substrate or between layers forming the transferring film. In such a case, as the peeling roller moves, the entered air also moves, which may result in adhesion failure (partial adhesion failure) at the interface between the transferring film and the substrate, or may cause interlayer peeling in the transferring film. Such a problem in terms of interlayer peeling may arise particularly in the case of a transferring film which is to be burned, the film including a transferring layer, the layer containing inorganic powder and an organic material which can be removed through burning.
In some cases, when a release film is peeled from the transferring film, a functional pattern forming the transferring layer may be broken.
Also, when the head equipped with the attaching roller and the peeling roller is separated from the substrate after completion of transfer, an excessive force is applied to the substrate, and the substrate may be broken. Alternatively, separation of the head may cause the transferring film to become slack, which results in an inconvenient problem when the subsequent transfer process is continuously carried out.
In view of the foregoing, an object of the present invention is to provide a method for producing a transfer body, which method neither causes adhesion failure at the interface between a transferring film and a substrate, nor causes interlayer peeling in the transferring film. Another object of the present invention is to provide a method for producing a transfer body with high productivity, which method neither causes breakage of a functional pattern forming a transferring layer during peeling of a release film from the transferring film, nor causes any damage to the substrate during separation of an attaching roller and a peeling roller from the substrate.

### Means for Solving the Problems

The present inventors have found that the aforementioned problems can be solved by modifying a method for bringing an attaching roller and a peeling roller into contact with a substrate and a transferring film.
Accordingly, the present invention provides the following.

[1] A method for producing a transfer body, comprising attaching a transferring film having a release film and a transferring layer onto a substrate by means of an attaching roller, and peeling off the release film by means of a peeling roller, characterized in that the method comprises pressing the transferring film onto the substrate by means of only the attaching roller at least at the time of initiation of attachment of the transferring film; attaching the transferring film onto the substrate by moving the attaching roller while pressing the transferring film; bringing the peeling roller into contact with the transferring film at a start point of attachment by means of the attaching roller; and peeling off the release film by moving the peeling roller.
[2] A method for producing a transfer body according to [1] above, wherein the release film is wound up by means of a winding roller after having been peeled from the transferring film.
[3] A method for producing a transfer body according to [2] above, wherein, after the transferring film has been attached onto the substrate by moving the attaching roller, the release film is fed from the winding roller so as to increase a peeling angle, and then the release film is peeled from the transferring film by moving the peeling roller.
[4] A method for producing a transfer body according to any of [1] to [3] above, wherein, after the transferring film has been attached onto the substrate by moving the attaching roller, the pressure of the attaching roller onto the transferring film is released, and then the release film is peeled off by moving the peeling roller.
[5] A method for producing a transfer body according to any of [1] to [4] above, wherein the substrate is a glass substrate.
[6] A method for producing a transfer body according to any of [1] to [5] above, wherein the transferring layer forming the transferring film contains an pressure-sensitive adhesive layer and a functional pattern; the functional pattern is formed from inorganic powder and an organic material which can be removed through burning; and the pressure-sensitive adhesive layer is formed from an organic material which can be removed through burning.
[7] A transfer machine characterized by comprising a feed roller; an attaching roller; a peeling roller; a mechanism for lifting and lowering the attaching roller and the peeling roller; a mechanism for moving the attaching roller and the peeling roller toward the feed roller while applying pressure to a transferring film; and a mechanism for peeling off a release film forming the transferring film and winding up the release film, wherein, during use, the transferring film is pressed onto a substrate by means of only the attaching roller at the time of initiation of attachment of the transferring film; the transferring film is attached onto the substrate by moving the attaching roller while pressing the transferring film; the peeling roller is brought into contact with the transferring film at a start point of attachment by means of the attaching roller; and the release film is peeled off by moving the peeling roller.
[8] A transfer body produced through a production method as recited in any of [1] to [6] above.

### Effects of the Invention

According to the production method of the present invention, adhesion failure does not occur at the interface between a transferring film and a substrate, and interlayer peeling does not occur in the transferring film. In addition, the production method can produce a transfer body with high productivity, without causing breakage of a functional pattern forming a transferring layer during peeling of a release film from the transferring film, nor causing any damage to the substrate during separation of an attaching roller and a peeling roller from the substrate. Best Modes for Carrying Out the Invention

The present invention relates to a method for producing a transfer body, in which a transferring film having a release film and a transferring layer is attached onto a substrate by means of an attaching roller, and the release film is peeled off by means of a peeling roller.
As shown in Fig. 1, a conventional pattern transfer method includes a step of lowering a head equipped with an attaching roller and a peeling roller, to thereby press a transferring film onto a substrate by means of both the attaching roller and the peeling roller (Fig. 1(A)). In contrast, as shown in Fig. 2(A), a feature of the method of the present invention resides in that only an attaching roller 11 is employed for pressing a transferring film 13 onto a substrate 14. Specifically, at the time of initiation of attachment of the transferring film, the transferring film 13 is pressed onto the substrate 14 at an attachment start point 16 by means of only the attaching roller 11, and a peeling roller 12 is not pressed onto the substrate 14. Then, the transferring film 13 is attached onto the substrate 14 by moving the attaching roller 11 while pressing the transferring film 13.

Meanwhile, as shown in Fig. 2(B), the peeling roller is brought into contact with the transferring film at the attachment start point 16. Specifically, after initiation of attachment of the transferring film 13 by means of the attaching roller 11, the peeling roller 12 is moved to a position above the attachment start point 16 and then lowered, to thereby bring the peeling roller 12 into contact with the transferring film 13 at the attachment start point 16. Subsequently, the peeling roller is moved for carrying out a peeling process (i.e., peeling of the release film). The peeling process may be initiated during attachment of the transferring film 13 by means of the attaching roller 11, or after completion of the attachment process. As described in detail hereinbelow, the peeling process is preferably carried out after release of the pressure of the attaching roller 11 onto the pattern-transferring film 13. More preferably, the peeling process is carried out after completion of the attachment process.
The aforementioned processes can prevent air from entering between the transferring film and the substrate or between layers forming the transferring film.

### [Mechanism of entering of air]

The present inventors have conducted extensive studies, and, as a result, have found that entering of air occurs by a mechanism shown in Fig. 3. The present invention has been accomplished for the purpose of solving this problem.
Specifically, in the conventional method shown in Fig. 1, as shown in Fig. 3(A), when the head equipped with the attaching roller and the peeling roller is lowered, air may enter between the transferring film and the substrate at a space (i.e., a portion 15 shown in Fig. 3(A)) between the attaching roller 11 and the peeling roller 12. In such a case, when the transferring film 13 is attached onto the substrate 14 by means of the attaching roller 11, and then the release film 131 is peeled off by moving the peeling roller 12, the entered air is squeezed in a direction of movement of the peeling roller 12, and thus agglomeration peeling may occur at the interface between layers forming the transferring film 13, or the transferring film 13 may be peeled from the substrate 14.

### [Operation and effect of the invention]

In contrast to the aforementioned conventional technique, in the present invention, as shown in Fig. 2, only the attaching roller 11 is employed for pressing the transferring film 13 onto the substrate 14. Therefore, no space is provided between the attaching roller 11 and the peeling roller 12. In addition, at the point at which the peeling roller 12 firstly comes into contact with the transferring film 13 (i.e., at the attachment start point 16), the transferring film 13 has been already attached onto the substrate 14 by means of the attaching roller 11. Therefore, air does not enter between the transferring film 13 and the substrate 14.

In the present invention, as shown in Fig. 4, a rolled transferring film (hereinafter may be referred to as a "feed roll") is preferably employed. When a feed roll 30 is employed, the transferring film can be continuously fed to the substrate, and thus high productivity is achieved. As shown in Fig. 4, for example, the feed roll 30 is formed by winding, around a core 31, the transferring film in which a transferring layer 132 is stacked on at least a portion of a release film 131. The size of the transferring layer 132 is determined on the basis of the size of the substrate. As shown in Fig. 4, a portion 135 between adjacent transferring layers (i.e., a portion having no transferring layer) is called a "space portion."
The transferring film is fed from the feed roll to the substrate which is conveyed by means of, for example, a belt conveyer, and the transferring film is attached onto the substrate through the method of the present invention, to thereby produce a transfer body.

### [Winding roller]

In a preferred embodiment, as shown in Fig. 2, the release film is wound up with a winding roller (not illustrated) via a guide roller 17. When the peeling roller is moved while the release film is wound up with the winding roller, the release film can be effectively peeled off, and thus high productivity is achieved.
However, when such a winding roller is employed, a tension is applied to the transferring film, resulting in a small peeling angle (reference numeral 20 shown in Fig. 5). Such a small peeling angle tends to cause high peeling strength, which may lead to breakage of, for example, a printing pattern provided on the transferring layer forming the transferring film. Therefore, in the present invention, as shown in Fig. 6, preferably, the release film is peeled from the transferring film through the following procedure: the release film is fed from the winding roller; the release film is caused to become slack at a portion between the guide roller 17 and the substrate (i.e., a portion before the peeling roller) so as to achieve a large peeling angle; and the peeling roller is moved toward the attaching roller. The peeling angle is particularly preferably 180°, since adverse effects on a printing pattern can be minimized.

In the conventional transfer method, the attaching roller 11 and the peeling roller 12 are simultaneously moved for production of a transfer body. Therefore, as shown in Fig. 7, the attaching roller 11 and the peeling roller 12 simultaneously apply pressure to the transferring film 13 at the time of completion of transfer. Similarly, even in the case where the transferring film 13 is attached onto the substrate by means of the attaching roller 11, and then the release film 131 is peeled off by moving the peeling roller 12, the attaching roller 11 and the peeling roller 12 simultaneously apply pressure to the transferring film 13.
Therefore, the transferring film 13 comes into surface contact with the substrate 14 (see a portion 18 in Fig. 7). In this case, when the head equipped with the attaching roller 11 and the peeling roller 12 is lifted, a strong force may be applied to the substrate 14, resulting in breakage of the substrate 14.
In a preferred embodiment of the present invention, as shown in Fig. 8, the transferring film 13 is attached onto the substrate 14 by moving the attaching roller 11; subsequently the attaching roller 11 is lifted, to thereby release the pressure of the roller onto the transferring film 13 (Fig. 8(A)); and then the release film 131 is peeled off by moving the peeling roller 12. In this embodiment, only the peeling roller 12 applies pressure to the transferring film 13 at the time of completion of transfer, and thus the transferring film 13 comes into line contact with the substrate 14 (see a portion 19 in Fig. 8). Therefore, when the head is lifted, the transferring film 13 is easily peeled from the substrate 14.

### [Transferring film]

No particular limitation is imposed on the transferring film employed in the present invention, so long as it includes a release film and a transferring layer. For example, in a preferred embodiment, as shown in Fig. 9, the transferring film includes a release film 131 and a transferring layer 132 stacked thereon, wherein the transferring layer 132 includes a functional pattern 133 containing inorganic powder and an organic material which can be removed through burning, and an pressure-sensitive adhesive layer 134 formed from an organic material which can be removed through burning.
In one embodiment, an intermediate layer formed from an organic material which can be removed through burning is provided between the functional pattern 133 and the pressure-sensitive adhesive layer 134. In another embodiment, a protective layer is provided between the functional pattern 133 and the release film 131. The intermediate layer serves as a barrier for preventing permeation, into the functional pattern, of a solvent or organic material contained in an adhesive employed for forming the pressure-sensitive adhesive layer. The protective layer plays a role in protecting unfired functional pattern transferred onto the substrate from deposition of foreign material or from scratching.

### [Release film]

No particular limitation is imposed on the release film, so long as it can be peeled off the transferring layer including the functional pattern. The release film may be formed of a film substrate without subjecting the substrate to any treatment. Alternatively, the release film may have a structure in which a film substrate is optionally provided with a release layer formed from, for example, a silicone or alkyd resin, or with a slightly adhesive layer for repeeling.
The release film substrate is preferably a flexible substrate, from the viewpoint of workability during transfer. The release film substrate may be formed from, for example, paper or a plastic material such as polyethylene, polyimide, polyethylene terephthalate, or acrylic resin. No particular limitation is imposed on the thickness of the release film substrate, and the thickness may be optimized in consideration of the balance between the flexibility of the film and the pressure applied to the film during transfer or the heat transference of the film. The thickness is generally 25 to 250 µm, preferably 35 to 125 µm, more preferably 50 to 75 µm, from the viewpoint of productivity or workability.

Formation of the functional pattern or any of the aforementioned layers on the release film may be carried out through a printing technique such as screen printing or offset printing, or a coating technique such as gravure coating. When the functional pattern is formed, any of the printing techniques is preferably employed. When any of the aforementioned layers is uniformly formed over a wide area, a coating technique is also preferably employed.
When the functional pattern or any of the aforementioned layers is formed through any of the aforementioned printing and coating techniques, a coating solution (paste) employed therefor is prepared by dispersing or dissolving, in a solvent, inorganic powder or an organic material to be contained in the pattern or the layer. The solvent employed is selected from among, for example, aqueous, alcohol, ketone, ester, ether, and hydrocarbon solvents, in consideration of the solubility or dispersibility of the inorganic powder or the organic material in the solvent, as well as the boiling point of the solvent suitable for a printing process. These solvents may be employed singly or in any combination. Such a solvent is employed for controlling the printability (e.g., viscosity or thixotropy) of the paste, or appropriately adjusting the solid content of the paste.

### [Functional pattern]

The functional pattern mainly contains inorganic powder which can be thermally fused to the substrate after burning and which can generate enough mechanical strength; inorganic powder which includes functional materials corresponding to the intended function after burning; and an organic material which is necessary for maintaining the shape of the pattern before burning and which is removed through burning.
The inorganic powder having thermal adhesiveness employed may be a glass frit or a similar material for the purpose of, for example, supporting the functional material on the substrate after burning, thereby improving the durability of the pattern. A glass frit having a suitable composition may be selected in consideration of the balance between, for example, burning temperature and percent thermal shrinkage.

The functional material employed may be an appropriately selected material which exhibits the intended function after burning. When, for example, a wiring pattern or an electrode pattern is formed, the functional material may be powder of Au, Ag, Cu, Ni, Co, Sn, Pb, Zn, Bi, or In, or powder of an alloy containing such a metal. Examples of the material employed in a capacitor component (e.g., a dielectric material) and in a high-resistance component include powders of BaTiO, SiC, TiO₂, SiO₂, RuO, etc.

No particular limitation is imposed on the organic material, so long as it can be removed through burning. Examples of the material which is readily removed through thermal decomposition by burning include resins such as acrylic resin, methylcellulose, nitrocellulose, ethylcellulose, vinyl acetate resin, polyvinyl butyral, polyvinyl acetal, polyvinyl alcohol, polyethylene oxide, and polyester. These materials may be employed singly or in any combination. A plasticizer (i.e., an organic component) may be added for the purpose of imparting flexibility to a coating film before burning. The plasticizer employed may be appropriately selected from among, for example, fatty acid esters and phosphoric acid esters.
The functional pattern may be formed of a single pattern or a plurality of patterns. When a plurality of patterns are employed, the patterns may be stacked with one another or arranged in parallel with one another. The thickness of the functional pattern is appropriately determined in consideration of the intended function thereof.

No particular limitation is imposed on the pressure-sensitive adhesive layer, so long as it is formed from an organic material which can be removed through burning. The pressure-sensitive adhesive layer may be formed from a material (adhesive) exhibiting adhesive property at room temperature, such as an acrylic material or a rubber material. The pressure-sensitive adhesive layer may be formed so as to cover the entire surface of a support (e.g., release film) or may be formed on the functional pattern so as to assume a pattern similar thereto.
The thickness of the pressure-sensitive adhesive layer is preferably 1 to 20 µm, more preferably 2 to 10 µm. When the thickness is 1 µm or more, a sufficient adhesive force is achieved, and transfer is favorably carried out. Meanwhile, when the thickness is 20 µm or less, an excessive amount of thermal decomposition gas is not generated, no defects occur in the functional pattern, and burning is sufficiently carried out. Preferably, the thickness of the pressure-sensitive adhesive layer is reduced to a minimum possible level, so long as it maintains a sufficient adhesive force.

### [Substrate]

No particular limitation is imposed on the substrate employed in the production method of the present invention, and any substrate may be employed. Specifically, the substrate may be, for example, a glass substrate. The production method of the present invention is particularly effective for the case where a glass substrate is employed. This is because a glass substrate is likely to cause the aforementioned problems, since it has a smooth surface and no air permeability.

### [Transfer machine]

The transfer machine employed in the production method of the present invention has the following configuration.
Specifically, a characteristic feature of the transfer machine of the present invention resides in that the machine includes a feed roller; an attaching roller; a peeling roller; a mechanism for lifting and lowering the attaching roller and the peeling roller; a mechanism for moving the attaching roller and the peeling roller toward the feed roller while applying pressure to a transferring film; and a mechanism for peeling off a release film forming the transferring film and winding up the release film, wherein, during use, the transferring film is pressed onto a substrate by means of only the attaching roller at the time of initiation of attachment of the transferring film; the transferring film is attached onto the substrate by moving the attaching roller while pressing the transferring film; the peeling roller is brought into contact with the transferring film at a start point of attachment by means of the attaching roller; and the release film is peeled off by moving the peeling roller.

### Examples

The present invention will next be described in more detail by way of examples, which should not be construed as limiting the invention thereto.

### Example 1

### (1) Production of transferring film

A transferring film to be burned was prepared through the following procedure.
Firstly, there was provided, as a release film, a PET film having a silicone release layer "A70" (product of Teijin DuPont Films Japan Limited, film size: 3.5 cm x 30 cm, thickness: 50 µm). Subsequently, an electrically conductive paste (i.e., a coating solution for a functional pattern) having the composition shown in Table 1 was prepared by means of a three-roll mill. Separately, a coating solution (paste) for an pressure-sensitive adhesive layer was prepared by replacing the solvent of an acrylic adhesive "SK1451" (product of Soken Chemical & Engineering Co., Ltd.) with Solvesso 150.
Next, the electrically conductive paste was applied (size: 2 cm × 5 cm, thickness: 15 µm) onto the release layer of the release film by means of a screen printing machine, to thereby form a functional pattern.
Subsequently, the paste for an pressure-sensitive adhesive layer was applied (thickness: 10 µm) so as to cover the entire surface of the release layer of the release film and the functional pattern by means of a Meyer bar, to thereby form an pressure-sensitive adhesive layer. Then, the solvent contained in the pressure-sensitive adhesive layer was thoroughly evaporated.
A portion containing the functional pattern was cut out of the release film having thereon a transferring layer formed of the pressure-sensitive adhesive layer and the functional pattern, to thereby prepare a transferring film (size: 6 cm × 35 cm) of Example 1.

### (2) Production of transfer body

A glass plate (size: 30 cm × 30 cm) produced through the float method was provided as a substrate. Immediately after having been prepared above in (1), the transferring film was placed on a surface of the glass plate so that the pressure-sensitive adhesive layer of the film faced the plate. Then, a pressure of 0.5 MPa was applied onto the release film by means of only an attaching roller, to thereby attach the transferring film onto the glass plate. Specifically, the transferring film was pressed at 0.5 MPa onto the glass plate at an attachment start point by means of only the attaching roller without causing a peeling roller to be pressed onto the glass plate, and the attaching roller was moved at a rate of 300 mm/second, to thereby attach the transferring film onto the glass plate.
Subsequently, the attaching roller was separated from the transferring film, and then the peeling roller was placed on the glass plate at the attachment start point. Thereafter, while the peeling roller was pressed onto the glass plate at 0.5 MPa, the peeling roller was moved at a rate of 300 mm/second, to thereby peel off the release film. Thus, a transfer body was produced. Next, the transfer body was burned in a burning furnace as follows. Specifically, the transfer body was heated from room temperature to 650°C at a temperature elevation rate of 20°C/min, maintained at 650°C for 30 minutes, and then left to cool down to 100°C or lower in the furnace.
The thus-cooled transfer body (glass plate having the functional pattern) was removed from the burning furnace and visually observed. It was found that no adhesion failure occurred at the interface between the transferring film and the glass plate, and no interlayer peeling occurred in the transferring film. Neither the functional pattern nor the glass plate was damaged.

### Comparative Example 1

The procedure of Example 1 was repeated, except that the transferring film was pressed at 0.5 MPa onto the glass plate by means of both the attaching roller and the peeling roller; the transferring film was attached onto the glass plate by moving the attaching roller; and then the release film was peeled off by moving the peeling roller without separating the attaching roller from the transferring film, to thereby produce a transfer body.
As in the case of Example 1, the thus-produced transfer body was visually observed. Problems arose in that, for example, the transferring layer was not partially or entirely attached to the glass plate; i.e., the layer remained on the release film.

### Industrial Applicability

According to the production method of the present invention, air does not enter between a transferring film and a substrate, or between layers forming the transferring film. The production method can produce a transfer body with high productivity, without causing breakage of a functional pattern forming a transferring layer during peeling of a release film from the transferring film, nor causing any damage to the substrate during separation of an attaching roller and a peeling roller from the substrate.
In the transfer body produced through the production method of the present invention, adhesion failure does not occur at the interface between the transferring film and the substrate, and interlayer peeling does not occur in the transferring film. In addition, the functional pattern is not broken, and the substrate is not damaged.
When the transfer machine of the present invention is employed, a transfer body can be produced with high productivity through the method of the present invention.

## Claims

1. A method for producing a transfer body, comprising attaching a transferring film (13) having a release film (131) and a transferring layer onto a substrate (14) by means of an attaching roller (11), and peeling off the release film by means of a peeling roller (12), **characterized in that** the method comprises pressing the transferring film (13) onto the substrate (14) by means of only the attaching roller (11) at least at the time of initiation of attachment of the transferring film (13) ; attaching the transferring film (13) onto the substrate (14) by moving the attaching roller (11) while pressing the transferring film (13); bringing the peeling roller (12) into contact with the transferring film (13) at a start point of attachment (16) by means of the attaching roller (11) ; and peeling off the release film (131) by moving the peeling roller (12).

2. A method for producing a transfer body according to claim 1, wherein the release film (131) is wound up by means of a winding roller after having been peeled from the transferring film (13).

3. A method for producing a transfer body according to claim 2, wherein, after the transferring film (13) has been attached onto the substrate (14) by moving the attaching roller (11), the release film (131) is fed from the winding roller so as to increase a peeling angle (20), and then the release film (131) is peeled from the transferring film by moving the peeling roller (12).

4. A method for producing a transfer body according to any of claims 1 to 3, wherein, after the transferring film (13) has been attached onto the substrate (14) by moving the attaching roller (11), the pressure of the attaching roller (11) onto the transferring film (13) is released, and then the release film (131) is peeled off by moving the peeling roller (12).

5. A method for producing a transfer body according to any of claims 1 to 4, wherein the substrate (14) is a glass substrate.

6. A method for producing a transfer body according to any of claims 1 to 5, wherein the transferring layer (132) forming the transferring film (13) contains a pressure-sensitive adhesive layer (134) and a functional pattern (133); the functional pattern is formed from inorganic powder and an organic material which can be removed through burning; and the pressure-sensitive adhesive layer (134) is formed from an organic material which can be removed through burning.

7. A transfer machine **characterized in that** it comprises a feed roller; an attaching roller (11); a peeling roller (12); a mechanism for lifting and lowering the attaching roller (11) and the peeling roller (12); a mechanism for moving the attaching roller (11) and the peeling roller (12) toward the feed roller while applying pressure to a transferring film (13); and a mechanism for peeling off a release film (131) forming the transferring film (13) and winding up the release film (131), wherein, during use, the transferring film (13) is pressed onto a substrate (14) by means of only the attaching roller (11) at the time of initiation of attachment of the transferring film (13); the transferring film (13) is attached onto the substrate (14) by moving the attaching roller (11) while pressing the transferring film (13) ; the peeling roller (12) is brought into contact with the transferring film (13) at a start point of attachment (16) by means of the attaching roller (11); and the release film is peeled off by moving the peeling roller (12).

8. A transfer body **characterized in that** it is produced through a production method as recited in any of claims 1 to 6.
